(19) **Europäisches Patentamt / European Patent Office / Office européen des brevets**

(11) **EP 3 125 255 A1**

(12) **EUROPEAN PATENT APPLICATION**
published in accordance with Art. 153(4) EPC

(43) Date of publication:
01.02.2017 Bulletin 2017/05

(21) Application number: 15768419.2

(22) Date of filing: 24.03.2015

(51) Int Cl.:
*H01B 5/02* (2006.01)     *D01F 9/24* (2006.01)
*D04H 1/4242* (2012.01)     *H01M 4/86* (2006.01)
*H01M 4/88* (2006.01)     *H01M 4/96* (2006.01)
*H01M 8/10* (2016.01)

(86) International application number:
PCT/JP2015/058929

(87) International publication number:
WO 2015/146984 (01.10.2015 Gazette 2015/39)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 27.03.2014 JP 2014064990

(71) Applicant: **Japan Vilene Company, Ltd.**
**Tokyo 104-8423 (JP)**

(72) Inventors:
• **ITO Tatsunori**
**Koga-shi**
**Ibaraki 306-0213 (JP)**
• **TARAO Takashi**
**Koga-shi**
**Ibaraki 306-0213 (JP)**
• **HARIGAYA Kaori**
**Koga-shi**
**Ibaraki 306-0213 (JP)**

(74) Representative: **Cohausz & Florack**
**Patent- & Rechtsanwälte**
**Partnerschaftsgesellschaft mbB**
**Bleichstraße 14**
**40211 Düsseldorf (DE)**

(54) **ELECTROCONDUCTIVE POROUS BODY, SOLID POLYMER FUEL CELL, AND METHOD FOR MANUFACTURING ELECTROCONDUCTIVE POROUS BODY**

(57) The object of the present invention is to provide a conductive porous material that has a large specific surface area, that is not easily damaged by pressure, and that can be applied to a variety of applications; a polymer electrolyte fuel cell, and a method of manufacturing a conductive porous material. The conductive porous material is one which is an aggregate of fibrous substances comprising first conductive materials, and second conductive materials that connect between the first conductive materials, and its specific surface area is 100 $m^2$/g or more, and its thickness retention rate after pressing at 2 MPa is 60% or more. Such a conductive porous material can be manufactured by spinning a spinning solution containing a first conductive material and a carbonizable organic material to form a precursor fiber porous material in which precursor fibers are aggregated, and carbonizing the carbonizable organic material to convert it into a second conductive material.

Figure 1

1508     N   D4.7  ×500   **200 µm**

**Description**

TECHNICAL FIELD

The invention relates to a conductive porous material, a polymer electrolyte fuel cell, and a method of manufacturing a conductive porous material.

BACKGROUND ART

Conventionally, a conductive porous material has been studied, by utilizing its conductivity and porosity, in order to use it as a base material for a gas diffusion electrode of a fuel cell, as an electrode for an electric double-layer capacitor, or as an electrode for a lithium ion secondary battery.

For example, International Publication No. 2011/089754 (patent literature 1) discloses a carbon fiber nonwoven fabric having a specific surface area of 1 to 50 $m^2$/g. However, it did not exhibit sufficient performance in various applications, because of a small specific surface area. For example, when it was used as an electrode for an electric double-layer capacitor, it was impossible to increase its capacitance.

Japanese Translation Publication (Kohyo) No. 2010-530929 (patent literature 2) discloses a method of making a carbon fiber, the method comprising: contacting carbon nanotubes (CNT) with an acrylonitrile-containing polymer to form a polymer-CNT dope; extruding the polymer-CNT dope to form a polymer-CNT fiber precursor; drawing the polymer-CNT fiber precursor; stabilizing the drawn polymer-CNT fiber; and carbonizing the stabilized polymer-CNT fiber. However, the carbon fibers produced by this method are easily damaged by pressure, and therefore, it was difficult to apply them to various applications. For example, in the case where a nonwoven fabric consisting of the carbon fibers was used as a base material for a gas diffusion electrode of a fuel cell, a membrane-electrode assembly is generally produced by hot press, but it was broken due to the pressure of the hot press, and therefore, the actual application was difficult.

[Patent literature 1] WO2011/089754
[Patent literature 2] Japanese Translation Publication (Kohyo) No. 2010-530929

SUMMARY OF INVENTION

TECHNICAL PROBLEM

The present invention has been accomplished under these circumstances, and an object of the present invention is to provide a conductive porous material that has a large specific surface area, that is not easily damaged by pressure, and that can be applied to a variety of applications; a polymer electrolyte fuel cell, and a method of manufacturing a conductive porous material.

SOLUTION TO PROBLEM

The present invention relates to:

[1] a conductive porous material, which is an aggregate of fibrous substances comprising first conductive materials, and second conductive materials that connect between the first conductive materials, wherein the conductive porous material has a specific surface area of 100 $m^2$/g or more, and a thickness retention rate after pressing at 2 MPa of 60% or more,
[2] the conductive porous material of [1], wherein the first conductive material is at least one selected from the group consisting of a fullerene, carbon nanotubes, carbon nanohorns, graphite, vapor grown carbon fibers, carbon black, a metal, and a metal oxide,
[3] the conductive porous material of [1] or [2], wherein the second conductive material is a carbonized organic material,
[4] the conductive porous material of any one of [1] to [3], wherein the porosity is 70% or more,
[5] the conductive porous material of any one of [1] to [4], wherein the conductive porous material is used as a base material for an electrode,
[6] a polymer electrolyte fuel cell, comprising the conductive porous material of any one of [1] to [5], as a base material for a gas diffusion electrode, and
[7] a method of manufacturing a conductive porous material, comprising the steps of: spinning a spinning solution containing a first conductive material and a carbonizable organic material to form a precursor fiber porous material

in which precursor fibers are aggregated, and

carbonizing the carbonizable organic material to convert it into a second conductive material, and obtaining a conductive porous material having a specific surface area of 100 m$^2$/g or more and a thickness retention rate after pressing at 2 MPa of 60% or more, which is an aggregate of fibrous substances in which the first conductive materials are connected to each other via the second conductive materials.

ADVANTAGEOUS EFFECTS OF INVENTION

The conductive porous material of [1] has a specific surface area of 100 m$^2$/g or more, which indicates a large surface area, and therefore, it exhibits sufficient performance in various applications. Further, the thickness retention rate after pressing at 2 MPa is 60% or more, which indicates that the thickness can be maintained without damage by pressure, and therefore, the porosity of the conductive porous material can be fully utilized. Furthermore, the conductive porous material of [1] is one which is an aggregate of fibrous substances comprising first conductive materials, and second conductive materials that connect between the first conductive materials, and therefore, it has a good conductivity.

The conductive porous material of [2] comprises the first conductive material having a good conductivity, such as a fullerene, carbon nanotubes, carbon nanohorns, graphite, vapor grown carbon fibers, carbon black, a metal, and a metal oxide, and therefore, it is a conductive porous material having a good conductivity.

The conductive porous material of [3] comprises the second conductive material obtained by carbonizing an organic material, and therefore, it has a good adhesiveness to the first conductive material, and has a good conductivity.

The conductive porous material of [4] has a porosity of 70% or more, which indicates many void spaces, and therefore, the void spaces in the conductive porous material can be effectively utilized.

The conductive porous material of [5] is used as a base material for an electrode, and therefore, it exhibits a good electrode performance. For example, when it is used as an electrode for an electric double-layer capacitor, an electric double-layer capacitor having a high capacitance can be manufactured.

The polymer electrolyte fuel cell of [6] comprises the conductive porous material as a base material for a gas diffusion electrode, the thickness can be maintained, and the specific surface area is large, and therefore, it has a good gas-suppliability and a good drainability.

According to the method of manufacturing a conductive porous material of [7], a conductive porous material that has a large specific surface area, that is not damaged by pressure, and that has a good conductivity can be manufactured.

BRIEF DESCRIPTION OF THE DRAWINGS

[Fig. 1] Fig. 1 is an electron micrograph (500 times) of a conductive porous sheet of Example 1.
[Fig. 2] Fig. 2 is an electron micrograph (2000 times) of a conductive porous sheet of Example 1.
[Fig. 3] Fig. 3 is an electron micrograph (500 times) of a conductive porous sheet of Comparative Example 1.
[Fig. 4] Fig. 4 is an electron micrograph (2000 times) of a conductive porous sheet of Comparative Example 1.
[Fig. 5] Fig. 5 is an electron micrograph (500 times) of a conductive porous sheet of Example 2.
[Fig. 6] Fig. 6 is an electron micrograph (2000 times) of a conductive porous sheet of Example 2.
[Fig. 7] Fig. 7 is an electron micrograph (500 times) of a conductive porous sheet of Comparative Example 2.
[Fig. 8] Fig. 8 is an electron micrograph (2000 times) of a conductive porous sheet of Comparative Example 2.
[Fig. 9] Fig. 9 is an electron micrograph (300 times) of a conductive porous sheet of Comparative Example 3.
[Fig. 10] Fig. 10 is an electron micrograph (2000 times) of a conductive porous sheet of Comparative Example 3.
[Fig. 11] Fig. 11 is an electron micrograph (500 times) of a conductive porous sheet of Comparative Example 4.
[Fig. 12] Fig. 12 is an electron micrograph (2000 times) of a conductive porous sheet of Comparative Example 4.
[Fig. 13] Fig. 13 is a photograph of a precursor fiber cured porous sheet of Comparative Example 5.
[Fig. 14] Fig. 14 is a photograph of a precursor fiber cured porous sheet after carbonization of Comparative Example 5.
[Fig. 15] Fig. 15 is a photograph of a precursor fiber cured porous sheet of Comparative Example 6.
[Fig. 16] Fig. 16 is a photograph of a precursor fiber cured porous sheet after carbonization of Comparative Example 6.
[Fig. 17] Fig. 17 is an electron micrograph (500 times) of a conductive porous sheet of Example 3.
[Fig. 18] Fig. 18 is an electron micrograph (2000 times) of a conductive porous sheet of Example 3.
[Fig. 19] Fig. 19 is an electron micrograph (500 times) of a conductive porous sheet of Example 4.
[Fig. 20] Fig. 20 is an electron micrograph (2000 times) of a conductive porous sheet of Example 4.
[Fig. 21] Fig. 21 is an electron micrograph (500 times) of a conductive porous sheet of Example 5.
[Fig. 22] Fig. 22 is an electron micrograph (2000 times) of a conductive porous sheet of Example 5.
[Fig. 23] Fig. 23 is an electron micrograph (500 times) of a conductive porous sheet of Example 6.

[Fig. 24] Fig. 24 is an electron micrograph (5000 times) of a conductive porous sheet of Example 6.
[Fig. 25] Fig. 25 is an electron micrograph (500 times) of a conductive porous sheet of Example 7.
[Fig. 26] Fig. 26 is an electron micrograph (2000 times) of a conductive porous sheet of Example 7.
[Fig. 27] Fig. 27 is an electron micrograph (500 times) of a conductive porous sheet of Example 8.
[Fig. 28] Fig. 28 is an electron micrograph (2000 times) of a conductive porous sheet of Example 8.
[Fig. 29] Fig. 29 is a photograph of a precursor fiber cured porous sheet of Comparative Example 7.
[Fig. 30] Fig. 30 is a photograph of a precursor fiber cured porous sheet after carbonization of Comparative Example 7.

DESCRIPTION OF EMBODIMENTS

The conductive porous material of the present invention is an aggregate of fibrous substances comprising first conductive materials, and second conductive materials that connect between the first conductive materials. Since the first conductive materials are connected to each other via the second conductive material, the conductive porous material has a good conductivity.

The term "first conductive material" as used herein means a conductive material having a uniform shape to some extent, and the term "second conductive material" means a conductive material having an irregular shape. In general, the first conductive material is superior in conductivity to the second conductive material.

The first conductive material used in the present invention is preferably a material having a good conductivity, for example, one material, or two or more materials selected from the group consisting of a fullerene, carbon nanotubes, carbon nanohorns, graphite, vapor grown carbon fibers, carbon black, a metal, and a metal oxide. Among these materials, carbon nanotubes are preferable, because carbon nanotubes per se have a good conductivity, and are easily oriented in the longitudinal direction of the fibrous substances, in the fibrous substances, and therefore, the fibrous substances have a good conductivity. Further, carbon nanotubes are preferable, because even in the case where the second conductive material is carbonized, such as a carbonized organic material, carbon nanotubes can inhibit shrinkage of precursor fibers prior to carbonization, during the carbonization. The preferable carbon nanotube may be a monolayered carbon nanotube, a multi-layered carbon nanotube, or a coiled nanotube.

The size of the first conductive material is not particularly limited, but when the first conductive material has a particle shape, the average particle diameter of the first conductive material is preferably 5 nm to 50 $\mu$m, more preferably 50 nm to 25 $\mu$m, and still more preferably 100 nm to 10 $\mu$m, so as to easily form fibrous substances.

The term "average particle diameter" as used herein basically means the number average particle diameter of the particles (the first conductive material) determined using a particle size distribution analyzer according to a dynamic light scattering method. However, in the case where the measurement by the dynamic light scattering method is difficult, for example, particles which form a state called an aggregate or a structure of carbon black or the like, electron micrographs of the first conductive material are taken, and the arithmetic mean value of the diameters of 50 particles (the first conductive material) that are reflected in the electron micrographs are regarded as the "average particle diameter". In this case, when the shape of the particle (the first conductive material) is photographically noncircular, the diameter of a circle having the same area as that of the particle (the first conductive material) in the electron micrograph is regarded as the diameter of the particle (the first conductive material).

In the case where the first conductive material has a fiber shape, the fiber diameter is preferably 10 nm to 5000 nm, more preferably 10 nm to 1000 nm, still more preferably 10 nm to 500 nm, and most preferably 10 nm to 250 nm. With respect to the fiber length, the aspect ratio is preferably 1000 or less, and more preferably 500 or less, so that the fibers (the first conductive material) are easily dispersed in a spinning solution and the fibrous substances.

Examples of the metal include gold, platinum, titanium, nickel, aluminum, silver, zinc, iron, copper, manganese, cobalt, and an alloy such as stainless steel. Examples of the metal oxide include oxides of these metals. The metals or the metal oxides may have a particle shape, a fiber shape, or a nanowire shape.

The fibrous substances that constitute the conductive porous material of the present invention are in a state where the first conductive materials are connected to each other with the second conductive materials, and therefore the fibrous substances have a good conductivity. In particular, in the case where the first conductive materials are bonded to each other with the second conductive materials, the fibrous substances have a good conductivity. The second conductive material is not particularly limited, so long as it can connect the first conductive materials to each other, but it is preferably a carbonized organic material, in view of a good adhesiveness to the first conductive material and a good conductivity. For example, when an organic material of the fibrous substances in a state where the first conductive materials are dispersed in the organic material is carbonized, the first conductive materials are adhered and connected to each other with the second conductive materials, to form fibrous substances having a good conductivity.

The organic material is not particularly limited, so long as it has a good adhesiveness to the first conductive material. Examples of the organic material include: carbonizable organic materials, for example, thermosetting resins, such as phenolic resins, urea resins, melamine resins, unsaturated polyester resins, epoxy resins, xylene resins, urethane resins, silicone resins, thermosetting polyimide resins, thermosetting polyamide resins, or the like; thermoplastic resins, such as polystyrene resins, polyester resins, polyolefin resins, polyimide resins, polyamide resins, polyamideimide resins, polyvinyl acetate resins, vinyl chloride resins, fluorocarbon resins, polyacrylonitrile resins, acrylic resins, polyether resins, polyvinyl alcohols, polyvinyl pyrrolidone, pitch, polyamino acid resins, polybenzimidazole resins, or the like; cellulose (polysaccharides), or tar; copolymers (such as an acrylonitrile-butadiene-styrene copolymer, an acrylonitrile-styrene copolymer, or the like) comprising monomers of these resins as components, or the like; or other resins. These organic materials may be used alone, or as a combination of two or more.

Among these organic materials, when thermosetting resins are contained as the organic materials, it is preferable, because shrinkage of the fibrous substances can be inhibited during carbonization, and the stiffness of the fibrous substances can be improved, and therefore, a conductive porous material that is not easily crushed by pressure can be produced. In particular, the second conductive materials prepared by carbonizing phenolic resins or epoxy resins are preferable because of a good conductivity. In connection with this, when only the thermosetting resins are used as the organic materials, the stiffness of the fibrous substances tend to be insufficient, and therefore, it is preferable that resins other than the thermosetting resins (for example, thermoplastic resins) are contained, as well as the thermosetting resins.

The fibrous substances in the present invention comprise the first conductive materials and the second conductive materials. The fibrous substances may be in a state where the second conductive materials are filled between the first conductive materials, that is to say, in a state where void spaces are not present between the first conductive materials. However, it is preferable that the fibrous substances per se are in a porous state where the first conductive materials are partially connected to each other with the second conductive materials, and that void spaces are present between the first conductive materials, so that they have a large specific surface area, and the void spaces in the fibrous substances can be utilized.

The first conductive materials can be present in the fibrous substances in any state. It is preferable that the first conductive materials are present throughout the fibrous substances, including the insides of the fibrous substances, because the fibrous substances have a good conductivity. Further, it is preferable that the ends of the first conductive materials protrude from the surface of the fibrous substances, because adjacent fiber substances are easily brought into contact with each other, and the fibrous substances have a good conductivity. Such fibrous substances, in which the first conductive materials are present throughout the fibrous substances, and the ends protrude from the surface of the fiber substances, can be produced, for example, by spinning a spinning solution containing a carbonizable organic material and an elongated (fibrous, tubular, or the like) first conductive material, and carbonizing the carbonizable organic material.

The mass ratio of the first conductive material and the second conductive material in the fibrous substances is not particularly limited, but it is preferably 10-90:90-10, more preferably 20-90:80-10, still more preferably 30-90:70-10, still more preferably 40-90:60-10, still more preferably 40-80:60-20, still more preferably 40-70:60-30, and most preferably 50-70:50-30. This is because the conductivity of the conductive porous material tends to become insufficient, when the first conductive material accounts for less than 10%. On the other hand, when the first conductive material accounts for more than 90%, the content of the second conductive material that connects between the first conductive materials becomes low, and therefore, the conductive porous material tends to have a poor conductivity, and further tends to be easily crushed by pressure.

The average fiber diameter of the fibrous substance is not particular limited, but it is preferably 0.1 $\mu$m to 50 $\mu$m, more preferably 0.1 $\mu$m to 30 $\mu$m, still more preferably 0.1 $\mu$m to 20 $\mu$m, still more preferably 0.3 $\mu$m to 15 $\mu$m, still more preferably 0.5 $\mu$m to 10 $\mu$m, and most preferably 0.5 $\mu$m to 5 $\mu$m. This is because when the average fiber diameter is more than 50 $\mu$m, the number of contact points between the fibrous substances in the conductive porous material is small, and therefore, the mechanical strength or the conductivity of the conductive porous material tends to become insufficient. On the other hand, when the average fiber diameter is less than 0.1 $\mu$m, there is a tendency that it is difficult to contain the first conductive material in the fibrous substances.

The term "average fiber diameter" as used herein means the arithmetic mean value of fiber diameters at 40 points. The term "fiber diameter" means a width perpendicular to the longitudinal direction of the fibrous substance observed in a micrograph of the plane of the fibrous substances, and when the ends of the first conductive materials protrude from the fibrous substances, it means a width of the fibrous substance excluding the protruding portions.

The specific surface area of the fibrous substances is not particularly limited, but it is preferable that the specific surface area is more than 100 m$^2$/g, so that the conductive porous material has a specific surface area of 100 m$^2$/g or more.

The "specific surface area" as used herein means a value measured by a BET method. For example, it can be measured using an automatic specific surface area/ pore size distribution measurement (BELSORP mini; BEL Japan, Inc.), and nitrogen gas as an adsorption gas.

The fibrous substances are preferably continuous fibrous substances so that they have a good conductivity. Such continuous fibrous substances can be produced, for example, by spinning a spinning solution containing the first conductive material and an organic material, which converts to the second conductive material, by an electrospinning method or a spunbonding method, and carbonizing the organic material to convert to the second conductive material.

The term "fibrous substances" as used herein means linearly-extended substances, in which the first conductive materials are connected to each other with the second conductive materials. It can be confirmed, for example, by an electron micrograph (about 500 to 2000 times).

The conductive porous material of the present invention is an aggregate of the above-mentioned fibrous substances, and is a porous material having void spaces between the fibrous substances. The shape of the conductive porous material is not particularly limited, but may be, for example, a two-dimensional form, such as filament-like or sheet-like, or a three-dimensional form, for example, columnar bodies, such as cylinder, prism, or triangular prism; cones, such as circular cone or pyramid; truncated cones, such as truncated circular cone or truncated pyramid; spherical bodies, such as sphere or hemisphere. The sheet-like form is preferable, because it has a good versatility.

The conductive porous material is an aggregate of the fibrous substances, and the fibrous substances may be bonded to each other, or may not be bonded to each other, but the bonded fibrous substances are preferable, because of a good conductivity and a good form stability. For example, it is preferable that the fibrous substances are bonded to each other with the second conductive materials, which constitute the fibrous substances.

The fibrous substances may be regularly aggregated, for example, may be woven or knitted. It is preferable that the aggregate of the fibrous substances are so-called in a nonwoven fabric state, in which the fibrous substances are randomly aggregated, and it is more preferable that they are composed of the nonwoven fabric state, so that the void spaces between the fibrous substances become finer. In connection with this, even in the case of the nonwoven fabric state, when the fibrous substances are oriented in a certain direction to some extent, the conductivity in the oriented direction is high.

The conductive porous material of the present invention is an aggregate of the fibrous substances, as previously described, and since it has a specific surface area of 100 m$^2$/g or more, which indicates a large surface area, it exhibits sufficient performance in various applications. For example, when the conductive porous material of the present invention is used as a base material for an electrode of an electric double-layer capacitor, an electric double-layer capacitor having a high capacitance can be produced. Since the larger the specific surface area is, the better various properties can be exhibited, the specific surface area is preferably 100 m$^2$/g to 3000 m$^2$/g, more preferably 150 m$^2$/g to 2500 m$^2$/g, still more preferably 200 m$^2$/g to 2000 m$^2$/g, still more preferably 200 m$^2$/g to 1000 m$^2$/g, still more preferably 200 m$^2$/g to 800m$^2$/g, and most preferably 200 m$^2$/g to 600 m$^2$/g. This is because when the specific surface area is more than 3000 m$^2$/g, the density of the fibrous substances decreases significantly, and therefore, there is a tendency that the strength and the conductivity of the conductive porous material are lowered.

Since the conductive porous material of the present invention has a thickness retention rate after pressing at 2 MPa of 60% or more, and therefore, is not damaged by pressure, and can maintain its thickness, the porosity of the conductive porous material can be fully utilized. For example, when it is used as a base material for an electrode of a polymer electrolyte fuel cell, it has a good gas-suppliability and a good drainability, because the thickness can be maintained. Since the higher the thickness retention is, the better the utilization of the void spaces of the conductive porous material is, the thickness retention is preferably 60% to 100%, more preferably 70% to 100%, still more preferably 80% to 100%, and most preferably 85% to 100%. This is because when the thickness retention is more than 100%, it is believed that the conductive porous material is damaged by pressure, and its thickness is increased, and as a result, there is a tendency that a decrease in strength, an increase in contact resistance, and the like, occur in the conductive porous material.

The thickness retention (Tr) is a value calculated from the following equation:

$$Tr = (Ta/Tb) \times 100$$

wherein Ta is a thickness at the time of removal of a pressure that is applied with a pressure of 2 MPa for 30 seconds in the stacking direction, in a state where the conductive porous material is sandwiched between a stainless steel plates, and Tb is a thickness of the conductive porous material prior to the pressure at 2 MPa. The term "thickness" as used herein means a value measured using a thickness gauge (manufactured by Mitutoyo Corporation: Code No. 547-401: measurement force 3.5 N or less).

The conductive porous material of the present invention preferably has a porosity of 70% or more, so that the void spaces in the conductive porous material can be effectively utilized. For example, when it is used as a base material for an electrode of a polymer electrolyte fuel cell, a fuel cell with a good gas-suppliability and a good drainability as well as a high power generation performance can be produced. Since the higher the porosity is, the more the void spaces can be included, and the more effectively the void spaces can be utilized, the porosity is preferably 70% to 99%, and more preferably 80% to 99%. This is because when the porosity is more than 99%, the form stability as the conductive porous material tends to decrease significantly.

The porosity (P, unit: %) is a value calculated from the following equation:

$$P = 100-(Fr1+Fr2+\cdots+Frn)$$

wherein Frn is a filling rate (unit: %) of component n, which constitutes the conductive porous material, and a value calculated from the following equation:

$$Frn = [M \times Prn/(T \times SGn)] \times 100$$

wherein M is a mass per unit area (unit: g/cm$^2$) of the conductive porous material, T is a thickness (cm) of the conductive porous material, Prn is a presence mass ratio of component n (for example, the first conductive material and the second conductive material) in the conductive porous material, and SGn is a specific gravity (unit: g/cm$^3$) of component n.

From the viewpoint of a good conductivity, the conductive porous material of the present invention has an electrical resistance of preferably 150 m$\Omega \cdot$cm$^2$ or less, more preferably 100 m$\Omega \cdot$cm$^2$ or less, still more preferably 50 m$\Omega \cdot$cm$^2$ or less, still more preferably 25 m$\Omega \cdot$cm$^2$ or less, and most preferably 15 m$\Omega \cdot$cm$^2$ or less. The term "electrical resistance" as used herein means a value obtained by measuring a voltage (V) in a state where the conductive porous material (25cm$^2$), which is cut into a 5-cm square, is sandwiched between carbon plates with a pressure of 2 MPa in the stacking direction, while applying a current (I) of 1 A; and calculating a resistance (R = V/I) and multiplying the resistance by the area (25cm$^2$) of the conductive porous material.

The conductive porous material of the present invention is an aggregate of the fibrous substances, as previously described, and the fibrous substances preferably account for 10 mass% or more of the conductive porous material, more preferably 50 mass% or more, still more preferably 70 mass% or more, still more preferably 90 mass% or more, and most preferably consists of the fibrous substances alone.

Materials other than the fibrous substances are not particularly limited, but examples thereof include: conductive materials, such as microparticles or fibrous substances of carbon fibers, a fullerene, carbon nanotubes, carbon nanohorns, graphite, vapor grown carbon fibers, carbon black, a metal, or a metal oxide; and nonconductive materials, for example, regenerated fibers such as Rayon, polynosic, or cupra, semisynthetic fibers such as acetate fibers, synthetic fibers such as nylon fibers, vinylon fibers, fluorine fibers, polyvinyl chloride fibers, polyester fibers, acrylic fibers, polyethylene fibers, polyolefin fibers, or polyurethane fibers, inorganic fibers such as glass fibers or ceramic fibers, plant fibers such as cotton or hemp, animal fibers such as wool or silk, activated carbon powder (for example, steam-activated charcoal, alkali-treated activated carbon, acid-treated activated carbon, or the like), inorganic particles (for example, manganese dioxide, iron oxide, copper oxide, nickel oxide, cobalt oxide, zinc oxide, titanium-containing oxide, zeolite, catalyst-carrying ceramics, silica, or the like), ion exchange resin powder, plant seeds, or the like.

The conductive porous material of the present invention is an aggregate of the fibrous substances, as previously described, and it may be a monolayered aggregate of a single type of fibrous substance alone, or a monolayered aggregate in which different fibrous substances are mixed, or a multi-layered aggregate in which two or more of these layers are stacked. The "different fibrous substances" means that there is at least one difference selected from the following differences: differences in composition, shape, size, density, strength, or the like of the first conductive material or the second conductive material; a difference in density of the fibrous substances; a difference in present state of the first conductive material in the fibrous substances; a difference in mass ratio of the first conductive material to the second conductive material in the fibrous substances; a difference in fiber diameter of the fibrous substances; a difference in length of the fibrous substances; a difference in porosity of the fibrous substances; a difference in aggregation state of the fibrous substances; a difference in specific surface area of the fibrous substances; or the like.

The mass per unit area and the thickness of the conductive porous material of the present invention are not particularly limited. With the viewpoint of conductivity, handleability, and productivity, the mass per unit area is preferably 0.5 to 500 g/m$^2$, more preferably 1 to 400 g/m$^2$, still more preferably 10 to 300 g/m$^2$, and most preferably 10 to 200 g/m$^2$. The thickness is not particularly limited, but it is preferably 1 to 2000 $\mu$m, more preferably 3 to 1000 $\mu$m, still more preferably 5 to 500 $\mu$m, and most preferably 10 to 300 $\mu$m.

The term "mass per unit area" as used herein means a value obtained by measuring the mass of a sample, which is cut into a 10-cm square, and converting it to a mass of a size of 1 m$^2$.

Since the conductive porous material of the present invention has a large surface area, and can maintain its thickness, it can be suitably used as a base material for an electrode. For example, when it is used as an electrode for a lithium ion secondary battery or an electric double-layer capacitor, a secondary battery or a capacitor having a large capacity can be produced. Further, when a polymer electrolyte fuel cell is equipped with the conductive porous material of the present invention, as a base material for a gas diffusion electrode, the void spaces can be maintained, and therefore, a good gas-suppliability and a good drainability can be exhibited as well as a good power generation performance.

In the case where it is equipped with the conductive porous material of the present invention, as a base material for a gas diffusion electrode of a polymer electrolyte fuel cell, as described above, since the conductive porous material of the present invention is porous, when nothing is filled in the void spaces between the fibrous substances, it has a good drainability in the thickness direction and the surface direction of the base material for a gas diffusion electrode, as well as a good diffusionability of the supplied gas.

When a fluorine resin and/or carbon is filled in the void spaces between the fibrous substances of the base material for a gas diffusion electrode, drainability can be improved by containing the former (fluorine resin), because liquid water is easily pushed out, and conductivity can be improved by containing the latter (carbon).

Examples of the fluorine resin include polytetrafluoroethylene (PTFE), polychlorotrifluoroethylene (PCTFE), polyvinylidene fluoride (PVDF), polyvinyl fluoride (PVF), perfluoroalkoxy fluorocarbon resin (PFA), tetrafluoroethylene-hexafluoropropylene copolymer (FEP), ethylene-tetrafluoroethylene copolymer (ETFE), ethylene-chlorotrifluoroethylene copolymer (ECTFE), vinylidene fluoride-tetrafluoroethylene-hexafluoropropylene copolymer (THV), copolymers of various monomers that constitute these resins, and the like.

Examples of the carbon include carbon fibers, a fullerene, carbon nanotubes, carbon nanohorns, graphite, vapor grown carbon fibers, carbon black, and the like.

The polymer electrolyte fuel cell of the present invention may be completely the same as a conventional polymer electrolyte fuel cell, except that it is equipped with the above-mentioned conductive porous material, as the base material for a gas diffusion electrode. That is to say, the fuel cell has a multi-layered structure of cell units, in which an assembly of a polymer electrolyte membrane and a gas diffusion electrode carrying a catalyst on the surface of the above-mentioned base material for a gas diffusion electrode is sandwiched between a pair of bipolar plates.

The conductive porous material of the present invention, as previously described, can be produced, for example, by spinning a spinning solution containing a first conductive material and a carbonizable organic material to form a precursor fiber porous material in which precursor fibers are aggregated, and carbonizing the carbonizable organic material to convert it into a second conductive material, and obtaining a conductive porous material having a specific surface area of 100 m$^2$/g or more and a thickness retention rate after pressing at 2 MPa of 60% or more, which is an aggregate of fibrous substances in which the first conductive materials are connected to each other via the second conductive materials.

First, the first conductive material and the carbonizable organic material are prepared. As the first conductive material, the above-mentioned first conductive material can be used. Carbon nanotubes are preferable, because carbon nanotubes per se have a good conductivity, and are easily oriented in the longitudinal direction of the fibrous substances, in the fibrous substances, and therefore, fibrous substances having a good conductivity can be produced.

As the carbonizable organic material, the above-mentioned carbonizable organic material can be used. When thermosetting resins are used, the stiffness of the fibrous substances can be improved, and therefore, a conductive porous material that is not easily crushed by pressure can be produced. In particular, phenolic resins or epoxy resins are preferable, because they are carbonized to become second conductive materials having a good conductivity.

The spinning solution can be prepared from only the first conductive material and the carbonizable organic material. In the case where spinnability is poor and fiberization is difficult, or in order to porosify the fibrous substances per se, or in order to improve the specific surface area of the conductive porous material, it is preferable to prepare the spinning solution using two or more types of carbonizable organic materials, and therefore, it is preferable to provide two or more types of carbonizable organic materials. In particular, when carbonizable organic materials that are different from each other in carbonization process or carbonization rate are used, the fibrous substances per se are porosified, and the specific surface area of the conductive porous material becomes easily high, and therefore, it is preferable to provide carbonizable organic materials that are different from each other in carbonization process or carbonization rate. That is to say, the spinnability is improved by containing a carbonizable organic material having a low carbonization rate. Further, during carbonization, because of an elimination of a relatively large amount of the carbonizable organic material having a low carbonization rate, the fibrous substances per se are porosified, and the specific surface area of the conductive porous material becomes high easily. Further, the spinnability is improved by containing carbonizable organic materials that are different from each other in a carbonization process, and further, it is considered that chemical reaction mechanisms (optimum temperature, time, decomposition, or the like) during a carbonization process are different, and differences in shrinkage rate, fluidity, or the like are generated, and therefore, the fibrous substances per se are porosified, and the specific surface area of the conductive porous material becomes high easily. Therefore, it is preferable to provide carbonizable organic materials that are different from each other in carbonization process or carbonization rate.

For example, when a spinning solution is prepared using, as the carbonizable organic materials, thermosetting resins having a high carbonization rate (in particular, phenolic resins or epoxy resins) and thermoplastic resins having a low carbonization rate (for example, fluorine resins), the spinnability is improved, and further, during carbonization, because of an elimination of most of the thermoplastic resins having a low carbonization rate, the fibrous substances per se are porosified, and the specific surface area of the conductive porous material becomes high easily, and therefore, it is preferable to provide such carbonizable organic materials that are different from each other in carbonization rate.

Examples of the fluorine resins include polytetrafluoroethylene (PTFE), polychlorotrifluoroethylene (PCTFE), polyvinylidene fluoride (PVDF), polyvinyl fluoride (PVF), perfluoroalkoxy fluorocarbon resin (PFA), tetrafluoroethylene-hexafluoropropylene copolymer (FEP), ethylene-tetrafluoroethylene copolymer (ETFE), ethylene-chlorotrifluoroethylene copolymer (ECTFE), vinylidene fluoride-tetrafluoroethylene-hexafluoropropylene copolymer (THV), copolymers of various monomers that constitute these resins, and the like.

When a spinning solution is prepared using, as the carbonizable organic materials, thermosetting resins (in particular, phenolic resins or epoxy resins) and thermoplastic resins different in carbonization process (for example, polyacrylonitrile resins), the spinnability is improved, and further, it is considered that during carbonization, because of a generation of differences in shrinkage rate or the like, the fibrous substances per se are porosified, and the specific surface area of the conductive porous material becomes high easily. Therefore, it is preferable to provide such carbonizable organic materials that are different from each other in a carbonization process.

When a spinning solution is prepared using, as the carbonizable organic material, thermosetting resins (in particular, phenolic resins or epoxy resins) and thermoplastic resins having a melting point, the spinnability is improved, and further, it is considered that during carbonization, because of the flow of the thermoplastic resins the fibrous substances per se are porosified, and the specific surface area of the conductive porous material becomes high easily. Therefore, it is preferable to provide such carbonizable organic materials that are different from each other in a carbonization process.

In addition to, or instead of, the organic materials that are different from each other in carbonization rate or carbonization process, as previously described, polymers prepared by polymerizing known inorganic compounds, for example, silicones such as polydimethylsiloxane, or inorganic polymers prepared by polymerizing metal alkoxides (methoxide, ethoxide, propoxide, butoxide, or the like of silicon, aluminum, titanium, zirconium, boron, tin, zinc, or the like) can be mixed to prepare a spinning solution, and therefore, such polymers may be provided.

Next, a spinning solution containing the first conductive material and the carbonizable organic material (preferably carbonizable organic materials that are different from each other in carbonization rate or carbonization process) is prepared. The solvent which constitutes the spinning solution is not particularly limited, so long as the first conductive material can be uniformly dispersed, and the carbonizable organic material (preferably carbonizable organic materials that are different from each other in carbonization rate or carbonization process) can be dissolved. Examples of the solvent include acetone, methanol, ethanol, propanol, isopropanol, tetrahydrofuran, dimethyl sulfoxide, 1,4-dioxane, pyridine, N,N-dimethylformamide, N,N-dimethylacetamide, N-methyl-2-pyrrolidone, acetonitrile, formic acid, toluene, benzene, cyclohexane, cyclohexanone, carbon tetrachloride, methylene chloride, chloroform, trichloroethane, ethylene carbonate, diethyl carbonate, propylene carbonate, water, or the like. These solvents may be used alone, or in a combination thereof. A poor solvent may be added, so long as it does not affect the spinnability.

The solid content concentration in the spinning solution is not particularly limited, but it is preferably 1 to 50 mass%, and more preferably 5 to 30 mass%. This is because when it is less than 1 mass%, the productivity is lowered significantly, and when it is more than 50 mass%, the spinning tends to become unstable.

Since the solid content of the first conductive material and the solid content of the carbonizable organic material (when two or more types are contained, the total amount thereof) in the spinning solution affect the mass ratio of the first conductive material and the second conductive material in the fiber substances, and as a result, affect the conductivity, the mass ratio of the solid content of the first conductive material and the solid content of the carbonizable organic material in the spinning solution is preferably 10-90:90-10, more preferably 20-90:80-10, still more preferably 30-90:70-10, and most preferably 40-90:60-10.

When the organic materials that are different from each other in carbonization rate and/or carbonization process are contained as the carbonizable organic material, the mass ratio of the first conductive material, the solid content of an organic material having a low carbonization rate, or an organic material having a relatively high shrinkage rate or fluidity, and the solid content of an organic material having a high carbonization rate, or an organic material having a relatively low shrinkage rate or fluidity is preferably 10-90:85-5:85-5, and more preferably 20-80:60-10:60-10, so that the fibrous substances per se can be porosified, and the specific surface area of the conductive porous material becomes high easily, as previously described.

Next, the spinning solution is spun to form a precursor fiber porous material in which precursor fibers are aggregated. The spinning method is not particularly limited, but examples of the spinning method include an electrospinning method, or a method as disclosed in JP 2009-287138 A, which is a method of fiberizing a spinning solution by ejecting a gas in parallel to the spinning solution extruded from exits for extruding liquid, and exerting a shearing force on the spinning solution single-linearly. Since precursor fibers having a small fiber diameter can be spun, and a thin precursor fiber porous material can be formed according to these spinning methods, a conductive porous material having a good conductivity can be produced. In particular, electrospinning is preferable, because precursor fibers having a continuous fiber length can be spun, and as a result, a conductive porous material consisting of fiber substances having a continuous fiber length can be produced.

According to such an electrospinning method or a method as disclosed in JP 2009-287138 A, the precursor fiber porous material, in which precursor fibers are aggregated, can be formed by directly collecting spun precursor fibers on a collector. When a three-dimensional collector is used as the collector, a precursor fiber porous material having a three-dimensional structure can be obtained.

As previously described, it is preferable that the carbonizable organic material contains thermosetting resins. When the carbonizable organic material contains thermosetting resins, it is preferable that after the precursor fiber porous material is formed, a heat treatment at a temperature wherein the thermosetting resins are thermally cured is carried out so that the thermosetting resins are cured. The conditions of the heat treatment temperature, time, or the like are not particularly limited, because they are different according to thermosetting resins.

As a solvent for the spinning solution, a solvent resistant to volatilization at the time of spinning is preferable, because when the solvent is removed by solvent replacement after forming a precursor fiber porous material, the precursor fibers easily become a plasticized and bonded state to each other, and as a result, a conductive porous material having a good conductivity can be easily produced; and since the precursor fiber porous material becomes dense, contact resistance is easily lowered; and further, since micropores are formed, a conductive porous material having a large specific surface area can be easily produced. Examples of the solvent resistant to volatilization at the time of spinning include N-methyl-2-pyrrolidone, 2-pyrrolidone, dimethylacetamide, propylene carbonate, dimethyl sulfoxide, or the like.

In order to impart or improve a binding force between the precursor fibers, it is considered that the precursor fibers are bonded to each other with a binder. When a binder is used, the binder is filled in the void spaces between the precursor fibers, or the binder covers contact portions of the precursor fibers and their surroundings, and as a result, the void spaces of the conductive porous material cannot sometimes be sufficiently utilized. For example, when the conductive porous material is used as a base material for a gas diffusion electrode, the permeability of a gas or liquid water tends to be lowered. Therefore, in the case where the precursor fibers are bonded to each other, it is preferable that they are bonded by plasticization of the carbonizable organic material by a solvent, fusion of the carbonizable organic material by heat, adhesion by pressure, or the like.

The "precursor fiber" means a fiber prior to carbonization of the carbonizable organic material. The carbonizable organic material converts into the second conductive material by carbonization, and the fibrous substances in which the first conductive materials are connected to each other via the second conductive materials is forms, and therefore, the fibers are expressed as precursor fibers, which mean fibers that are a source of the fibrous substances.

The precursor fibers are wound up as continuous fibers, and are cut into a desired fiber length to obtain short fibers, and a fiber web is formed by a known dry method or wet method, and is bonded to obtain a precursor fiber porous material. Alternatively, continuous precursor fibers are used, and are woven or knitted by a conventional method to obtain a precursor fiber porous material. However, as previously described, it is preferable that the fibrous substances are continuous, and it is preferable that the precursor fiber porous material has a nonwoven fabric structure, and therefore, it is preferable that the precursor fiber porous material is formed by directly collecting continuous precursor fibers.

Subsequently, the carbonizable organic material of the precursor fibers, which constitutes the precursor fiber porous material, is carbonized to convert it into the second conductive material, and a conductive porous material having a specific surface area of 100 $m^2$/g or more and a thickness retention rate after pressing at 2 MPa of 60% or more, which is an aggregate of fibrous substances in which the first conductive materials are connected to each other via the second conductive materials, is produced.

The carbonization is not particularly limited, so long as the carbonizable organic material can be converted into the second conductive material. Carbonization can be performed, for example, by heating at a maximum temperature of 800 to 3000°C under an inert gas atmosphere, such as nitrogen, helium, argon, or the like. The heating rate is preferably 5 to 100°C/min., and more preferably 5 to 50°C/min. The holding time at the maximum temperature is preferably 3 hours or less, and more preferably 0.5 to 2 hours.

The conductive porous material of the present invention has a specific surface area of 100$m^2$/g or more, which indicates a large surface area. Such a conductive porous material can be easily produced, by spinning a spinning solution containing organic materials different in carbonization rate or carbonization process to form precursor fibers, and extracting or eliminating an organic material having a low carbonization rate from the precursor fibers; by forming the precursor porous material using a solvent resistant to volatilization at the time of spinning, and removing the solvent by solvent replacement; and/or utilizing shrinkage or fluidity of the organic materials different in the carbonization process in the precursor fibers, at the time of carbonization.

The conductive porous material of the present invention has a thickness retention rate after pressing at 2 MPa of 60% or more, and is not easily crushed. The conductive porous material can be easily produced by using thermosetting resins as the carbonizable organic material, and by inhibiting shrinkage or the like during carbonization by carbonization after curing the thermosetting resins, and by carbonizing it while maintaining the form of the precursor fiber porous material.

It is preferable that the conductive porous material of the present invention has a porosity of 70% or more, and has many void spaces. With respect to such a conductive porous material having a high porosity, when the conductive porous material is an aggregate of fibrous substances having a fiber diameter of 0.1 $\mu$m to 50 $\mu$m, the above-mentioned porosity range is easily satisfied. Precursor fibers, which are a source of the fibrous substances having the above-mentioned fiber diameter, can be easily produced by an electrospinning method, a method as disclosed in JP 2009-287138 A, or spunbonding method. When a binder is used in order to bond the precursor fibers to each other, the binder is filled in the void spaces between the precursor fibers, or the binder covers contact portions of the precursor fibers and their surroundings, and as a result, the porosity is lowered, and therefore, the above-mentioned porosity range is easily satisfied by bonding the precursor fibers to each other, not using such a binder, with the carbonizable organic material that constitutes the precursor fibers.

In the conductive porous material of the present invention, various properties suitable to each application can be imparted or improved by various post-processing. For example, in the case where the conductive porous material of the present invention is used as a base material for a gas diffusion electrode of a polymer electrolyte fuel cell, the conductive porous material can be immersed in a fluorine-based dispersion, such as a polytetrafluoroethylene dispersion, to impart a fluorine resin, and can be sintered at a temperature of 300 to 350°C, in order to improve water-repellency of the conductive porous material, and improve drainability and gas-diffusivity.

EXAMPLES

The present invention now will be further illustrated by, but is by no means limited to, the following Examples.

<Preparation of first spinning solution>

A vinylidene fluoride-tetrafluoroethylene-hexafluoropropylene copolymer (THV, low carbonizable organic material) was added to N-methyl-2-pyrrolidone (NMP), and dissolved therein using a rocking mill to obtain a solution having a concentration of 10 mass%.

Next, carbon nanotubes (CNT) (product name: VGCF-H (manufactured by SHOWADENKO K.K.), fiber diameter: 150 nm, aspect ratio: 40, multi-layered carbon nanotube), which were synthesized by a CVD method, as the first conductive material, were added to the solution. After being stirred, the mixture was diluted by adding NMP thereto, and the carbon nanotubes were dispersed, to prepare a dispersed solution.

A high carbonizable organic material (EP), wherein a cresol novolac epoxy resin was a main agent and a novolac-type phenolic resin was a curing agent, was further added to the dispersed solution, to prepare a first spinning solution having a solid mass ratio of 40:30:30 (CNT:THV:EP) and a solid content concentration of 16 mass%.

<Preparation of second spinning solution>

A second spinning solution was prepared in a similar manner to the procedure of preparing the first spinning solution, except that carbon black (CB, manufactured by Denki Kagaku Kogyo K.K., product name: DENKA BLACK granule products) was used instead of carbon nanotubes (CNT).

<Preparation of third spinning solution>

A vinylidene fluoride-tetrafluoroethylene-hexafluoropropylene copolymer (THV, low carbonizable organic material) was added to N,N-dimethylformamide (DMF), and dissolved therein using a rocking mill to obtain a solution having a concentration of 10 mass%.

Next, carbon black (CB) (manufactured by Denki Kagaku Kogyo K.K., product name: DENKA BLACK granule products) was mixed with the solution. After being stirred, the mixture was diluted by adding DMF thereto, and the carbon black was dispersed, to prepare a third spinning solution having a solid mass ratio of 40:60 (CB:THV) and a solid content concentration of 10 mass%.

<Preparation of fourth spinning solution>

Polyacrylonitrile (PAN, high carbonizable organic material) was added to N,N-dimethylformamide (DMF), and dissolved therein using a rocking mill to obtain a solution having a concentration of 20 mass%.

Next, carbon nanotubes (CNT) (product name: VGCF-H (manufactured by SHOWADENKO K.K.), fiber diameter: 150 nm), which were synthesized by a CVD method, were added to the solution. After being stirred, the mixture was diluted by adding DMF thereto, and the CNTs were dispersed, to prepare a fourth spinning solution having a solid mass ratio of 1:99 (CNT:PAN) and a solid content concentration of 15 mass%.

<Preparation of fifth spinning solution>

A fifth spinning solution was prepared in a similar manner to the procedure of preparing the fourth spinning solution, except that the solid mass ratio was 5:95 (CNT:PAN).

(Example 1)

Continuous precursor fibers obtained by spinning the first spinning solution by electrospinning under the following conditions were directly collected on a stainless steel drum as a counter electrode to prepare a precursor fiber porous sheet in a nonwoven fabric form.

(Conditions for electrospinning)

Electrodes: a metal nozzle (inner diameter: 0.33 mm) and a stainless steel drum
Discharge rate: 2 g/hr
Distance between the nozzle tip and the stainless steel drum: 10 cm
Applied voltage: 10 kV
Temperature/humidity: 25°C/35% RH

Next, the precursor fiber porous sheet was immersed in a water bath to carry out solvent replacement, and a hot-air dryer set to a temperature of 60°C was used to remove water. The epoxy resin as the high carbonizable organic material was cured by a heat treatment for 1 hour, using a hot-air dryer set to a temperature of 150°C, to obtain a precursor fiber cured porous sheet.

Then, the precursor fiber cured porous sheet was subjected to a carbonizing and sintering treatment under an argon gas atmosphere at a temperature of 800°C for 1 hour (heating rate: 10°C/min.), using a tubular furnace, to carbonize the epoxy resin and THV, and to eliminate most of the THV from the sheet, and a monolayered, conductive porous sheet having a nonwoven fabric structure (mass per unit area: 60 $g/m^2$, thickness: 230 $\mu$m, porosity: 86%) was produced.

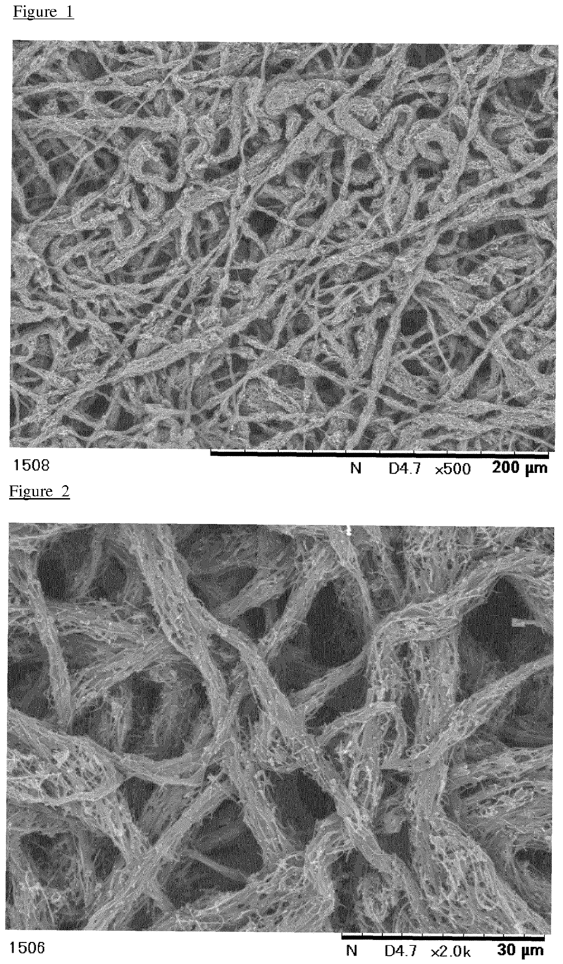

In the conductive porous sheet, as shown in Fig. 1 and Fig. 2, only porous and continuous fibrous substances (average fiber diameter: 3.3 $\mu$m, mass ratio (CNT:total of carbonized EP and carbonized THV) = 58:42, specific surface area: 250 $m^2/g$), in which CNTs were dispersed throughout the sheet including its inside, and the CNTs were partially connected and bonded to each other with carbonized EP and carbonized THV, were randomly aggregated to form the sheet. The fibrous substances were also bonded to each other with carbonized EP and carbonized THV, and were in a state where the ends of CNTs protruded from the fibrous substances. CNTs were oriented in the longitudinal direction of the fibrous substances. The physical properties of the conductive porous sheet are shown in Fig. 1.

(Comparative Example 1)

The monolayered, precursor fiber cured porous sheet having a nonwoven fabric structure, prior to the carbonization in Example 1, was prepared as a conductive porous sheet (mass per unit area: 87 $g/m^2$, thickness: 240 $\mu$m, porosity: 77%).

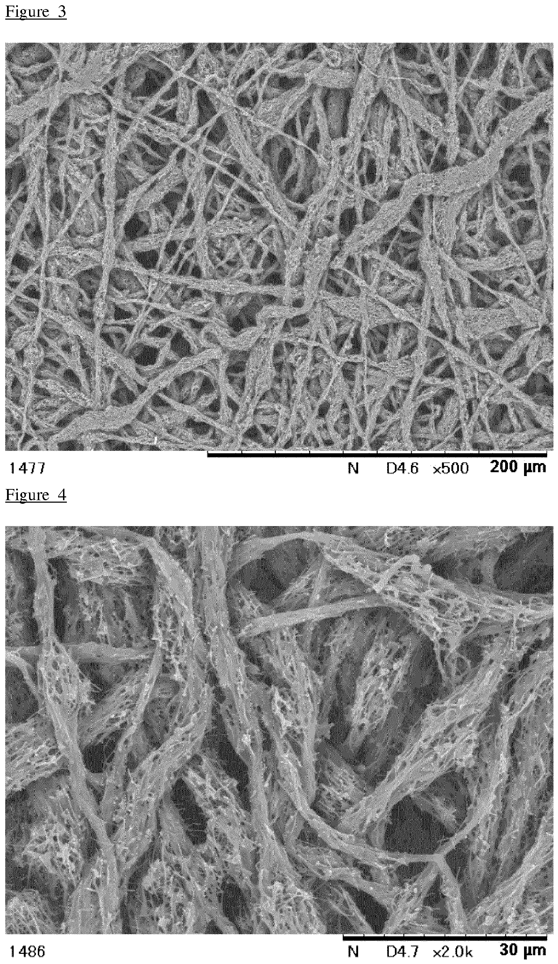

In the conductive porous sheet, as shown in Fig. 3 and Fig. 4, only porous and continuous fibrous substances (average fiber diameter: 3.6 $\mu$m, mass ratio (CNT:total of EP and THV) = 40:60, specific surface area: 2.7 $m^2/g$), in which CNTs were dispersed throughout the sheet including its inside, and the CNTs were partially connected and bonded to each other with EP and THV, were randomly aggregated to form the sheet. The fibrous substances were also bonded to each other with EP and THV, and were in a state where the ends of CNTs protruded from the fibrous substances. CNTs were oriented in the longitudinal direction of the fibrous substances. The physical properties of the conductive porous sheet are shown in Fig. 1.

(Example 2)

A monolayered, conductive porous sheet having a nonwoven fabric structure (mass per unit area: 67 $g/m^2$, thickness: 193 $\mu$m, porosity: 81 %) was produced in a similar manner to the procedure of Example 1, except that the second spinning solution was used.

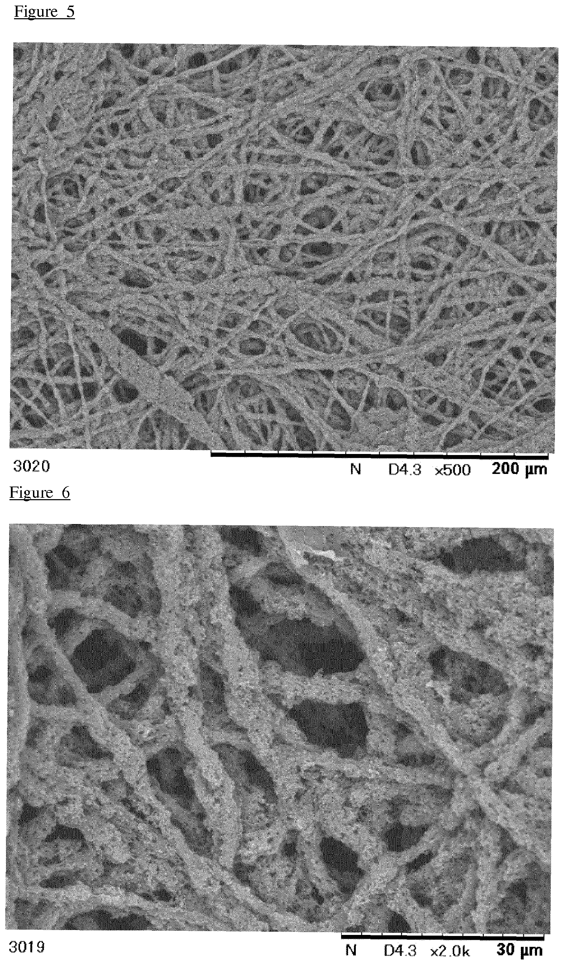

In the conductive porous sheet, as shown in Fig. 5 and Fig. 6, only porous and continuous fibrous substances (average fiber diameter: 2.6 $\mu$m, mass ratio (CB:total of carbonized EP and carbonized THV) = 66:34, specific surface area: 443 $m^2/g$), in which CB was dispersed throughout the sheet including its inside, and the CB was partially connected and bonded to each other with carbonized EP and carbonized THV, were randomly aggregated to form the sheet. The fibrous substances were also bonded to each other with carbonized EP and carbonized THV. The physical properties of the conductive porous sheet are shown in Fig. 1.

(Comparative Example 2)

The monolayered, precursor fiber cured porous sheet having a nonwoven fabric structure, prior to the carbonization in Example 2, was prepared as a conductive porous sheet (mass per unit area: 110 g/m$^2$, thickness: 220 $\mu$m, porosity: 70%).

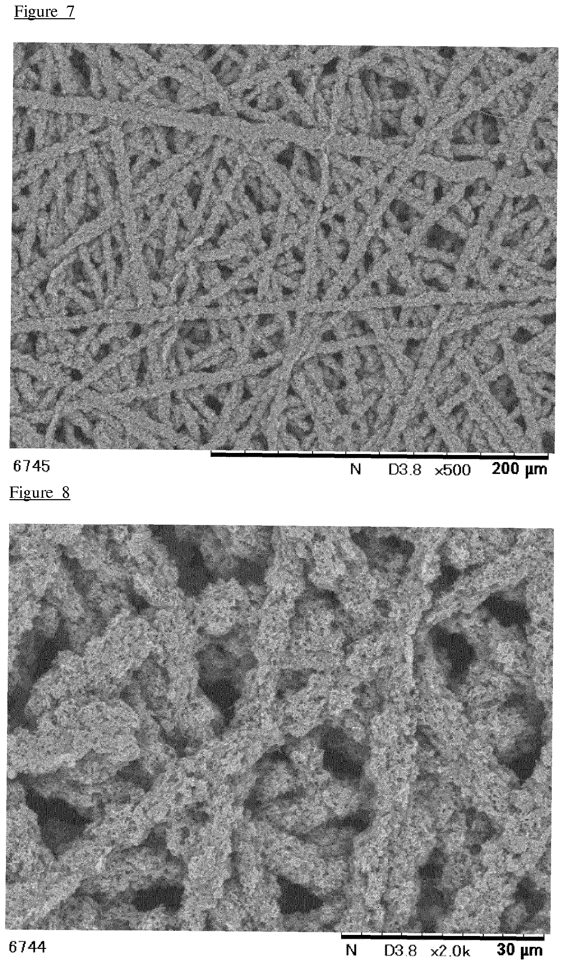

In the conductive porous sheet, as shown in Fig. 7 and Fig. 8, only porous and continuous fibrous substances (average fiber diameter: 3.8 $\mu$m, mass ratio (CB:total of EP and THV) = 40:60, specific surface area: 53 m$^2$/g), in which CB was dispersed throughout the sheet including its inside, and the CB was partially connected and bonded to each other with EP and THV, were randomly aggregated to form the sheet. The fibrous substances were also bonded to each other with EP and THV. The physical properties of the conductive porous sheet are shown in Fig. 1.

(Comparative Example 3)

A carbon paper (TGP-H-060, manufactured by Toray Industries, Inc., mass per unit area: 84 g/m$^2$, thickness: 190 $\mu$m, porosity: 75%) was prepared as a conductive porous sheet.

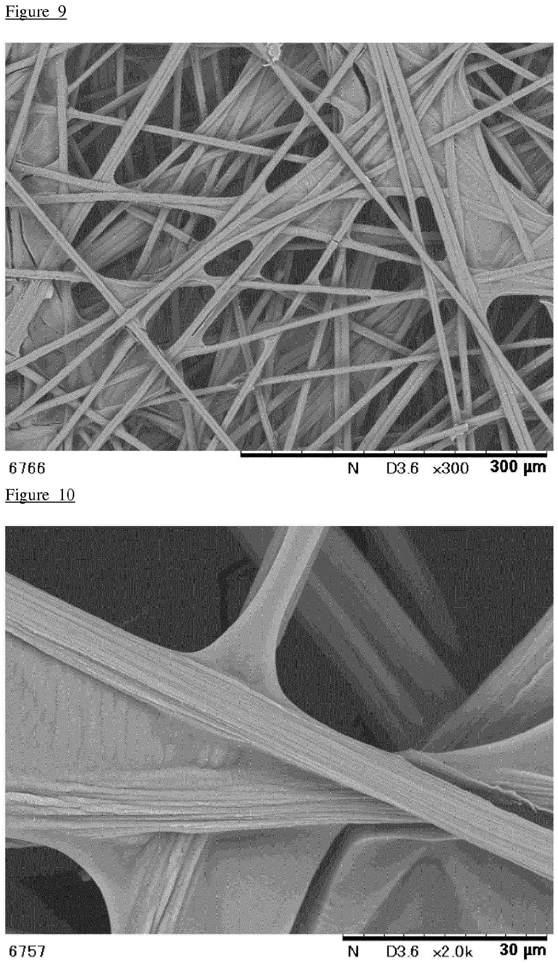

In the conductive porous sheet, as shown in Fig. 9 and Fig. 10, carbon fibers were bonded to each other with a binder resin. The physical properties of the conductive porous sheet are shown in Fig. 1.

(Comparative Example 4)

A monolayered, conductive porous sheet having a nonwoven fabric structure (mass per unit area: 33 g/m$^2$, thickness: 190 $\mu$m, porosity: 90%) was produced in a similar manner to the procedure of Example 1, except that the third spinning solution was used.

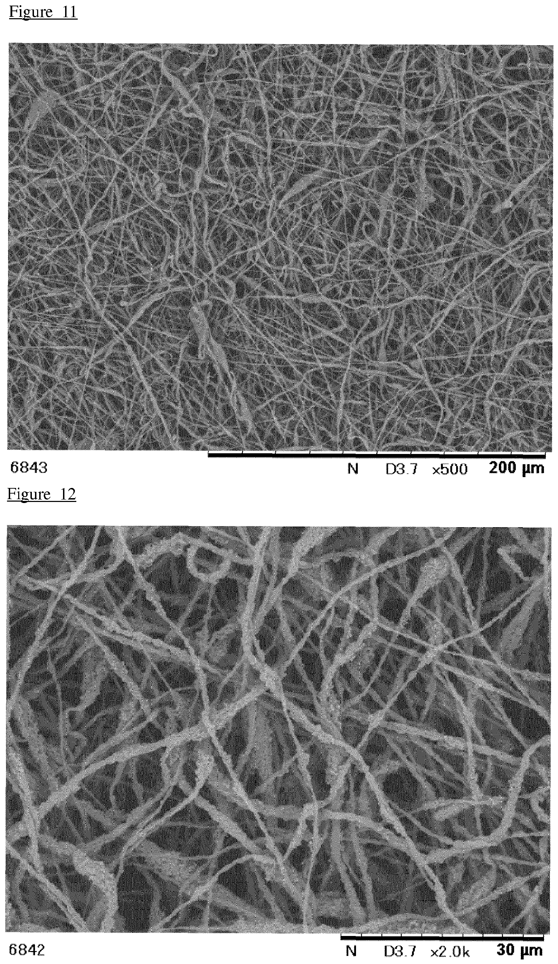

In the conductive porous sheet, as shown in Fig. 11 and Fig. 12, only porous and continuous fibrous substances (average fiber diameter: 0.8 $\mu$m, specific surface area: 25 m$^2$/g), in which CB was dispersed throughout the sheet including its inside, and the CB was bonded to each other, were randomly aggregated to form the sheet. Between the fibrous substances, CB was bonded to each other. The physical properties of the conductive porous sheet are shown in Fig. 1.

(Comparative Example 5)

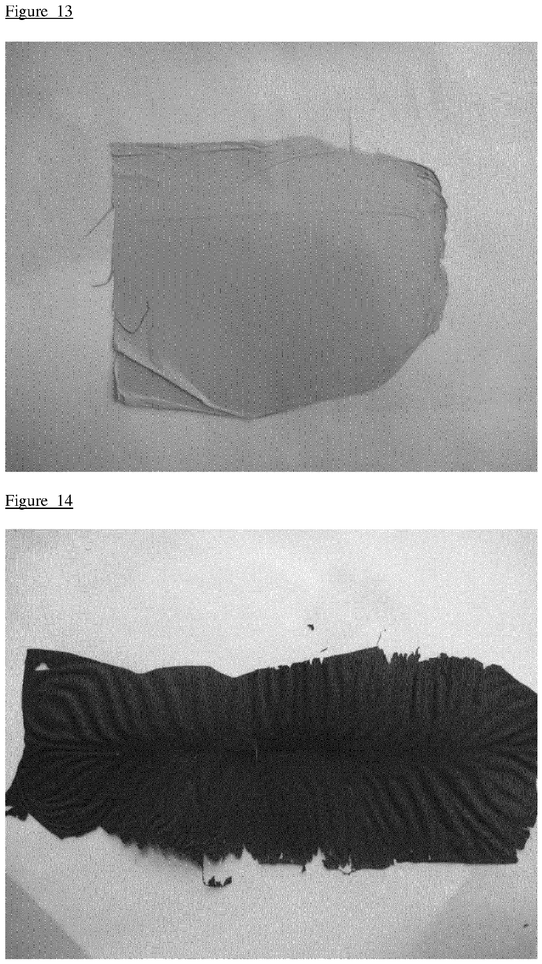

After a precursor fiber cured porous sheet was obtained in a similar manner to the procedure of Example 1, except that the fourth spinning solution was used, the precursor fiber cured porous sheet was carbonized. Fragmentation due to shrinkage occurred, and the sheet form could not be maintained (Fig. 13 and Fig. 14).

(Comparative Example 6)

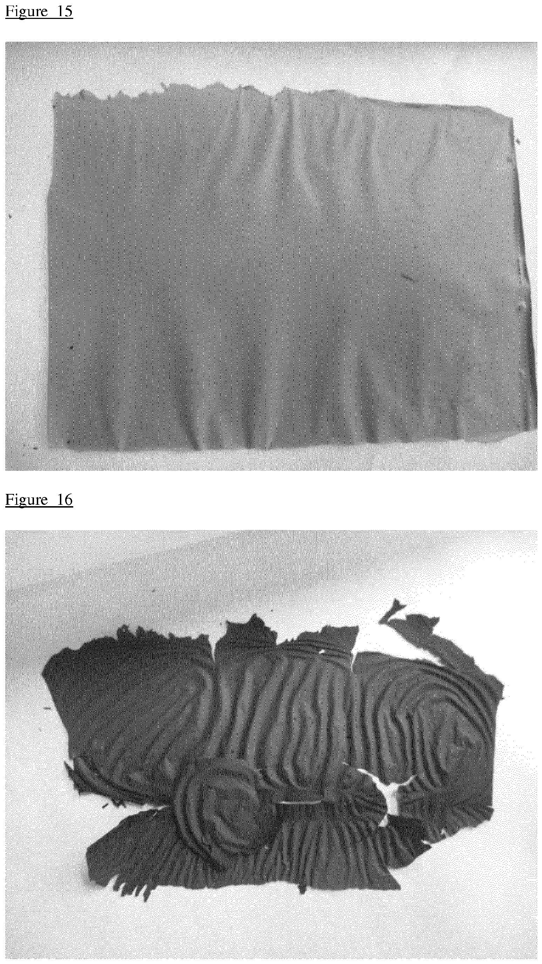

After a precursor fiber cured porous sheet was obtained in a similar manner to the procedure of Example 1, except that the fifth spinning solution was used, the precursor fiber cured porous sheet was carbonized. Fragmentation due to shrinkage occurred, and the sheet form could not be maintained (Fig. 15 and Fig. 16).

[Table 1]

|  | (a) | (b) | (c) | (d) |
|---|---|---|---|---|
| Example 1 | 250 | 95 | 86 | 5 |
| Example 2 | 443 | 90 | 81 | 7 |
| Comp. Example 1 | 2.7 | 95 | 77 | 400 |
| Comp. Example 2 | 53 | 90 | 70 | 70 |
| Comp. Example 3 | 0.9 | 95 | 75 | 5 |
| Comp. Example 4 | 25 | 40 | 90 | 40 |
| Comp. Example 5[#] | $\times$ | $\times$ | $\times$ | $\times$ |

(continued)

|  | (a) | (b) | (c) | (d) |
|---|---|---|---|---|
| Comp. Example 6[#] | × | × | × | × |

(a): specific surface area ($m^2/g$)
(b): thickness retention rate (%)
(c): porosity (%)
(d): electrical resistance ($m\Omega \cdot cm^2$)
# : In Comparative Examples 5 and 6, since the sheet form could not be maintained due to fragmentation by shrinkage during carbonization, the measurement could not be done.

As apparent from Table 1, the conductive porous material of the present invention had a large surface area, was not easily damaged by pressure, and had a good conductivity.

<Preparation of sixth spinning solution>

A vinylidene fluoride-tetrafluoroethylene-hexafluoropropylene copolymer (THV, low carbonizable organic material) was added to N,N-dimethylformamide (DMF), and dissolved therein using a rocking mill to obtain a solution having a concentration of 10 mass%.

Next, carbon nanotubes (CNT) (product name: VGCF-H (manufactured by SHOWA DENKO K.K.), fiber diameter: 150 nm, aspect ratio: 40, multi-layered carbon nanotube), which were synthesized by a CVD method, as the first conductive material were added to the solution. After being stirred, the mixture was diluted by adding NMP thereto, and the carbon nanotubes were dispersed, to prepare a dispersed solution.

A high carbonizable organic material (EP), wherein a cresol novolac epoxy resin was a main agent and a novolac-type phenolic resin was a curing agent, was further added to the dispersed solution, to prepare a sixth spinning solution having a solid mass ratio of 40:30:30 (CNT:THV:EP) and a solid content concentration of 20 mass%.

<Preparation of seventh spinning solution>

A seventh spinning solution was prepared in a similar manner to the procedure of preparing the sixth spinning solution, except that the solid mass ratio was 25:45:30 (CNT:THV:EP) and the solid content concentration was 18 mass%.

<Preparation of eighth spinning solution>

A eighth spinning solution was prepared in a similar manner to the procedure of preparing the sixth spinning solution, except that the solid mass ratio was 40:30:30 (CNT:THV:EP), dimethyl sulfoxide (DMSO) was used as the solvent, and the solid content concentration was 18 mass%.

<Preparation of ninth spinning solution>

A ninth spinning solution was prepared in a similar manner to the procedure of preparing the sixth spinning solution, except that the solid mass ratio was 10:60:30 (CNT:THV:EP).

(Example 3)

Continuous precursor fibers obtained by spinning the sixth spinning solution by electrospinning under the following conditions were directly collected on a stainless steel drum as a counter electrode to prepare a precursor fiber porous sheet in a nonwoven fabric form.

(Conditions for electrospinning)

Electrodes: a metal nozzle (inner diameter: 0.33 mm) and a stainless steel drum
Discharge rate: 4 g/hr

Distance between the nozzle tip and the stainless steel drum: 14 cm
Applied voltage: 10 kV
Temperature/humidity: 25°C/30% RH

Next, the epoxy resin as the high carbonizable organic material was cured by a heat treatment for 1 hour, using a hot-air dryer set to a temperature of 150°C, to obtain a precursor fiber cured porous sheet.

Then, the precursor fiber cured porous sheet was subjected to a carbonizing and sintering treatment under an argon gas atmosphere at a temperature of 800°C for 1 hour (heating rate: 10°C/min.), using a tubular furnace, to carbonize the epoxy resin and THV, and to eliminate most of the THV from the sheet, and a monolayered, conductive porous sheet having a nonwoven fabric structure (mass per unit area: 114 g/m$^2$, thickness: 220 $\mu$m, porosity: 73%) was produced.

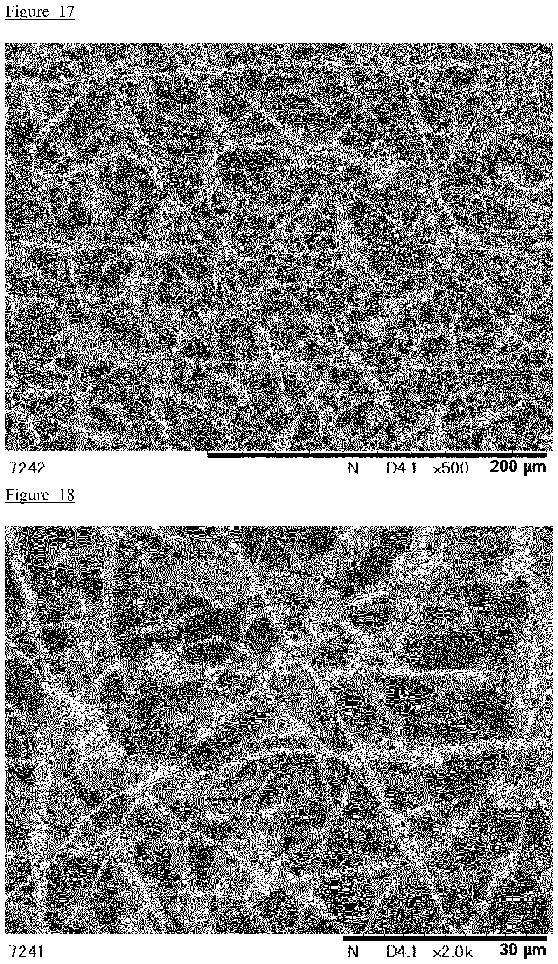

In the conductive porous sheet, as shown in Fig. 17 and Fig. 18, only porous and continuous fibrous substances (average fiber diameter: 1.1 $\mu$m, mass ratio (CNT:total of carbonized EP and carbonized THV) = 52:48, specific surface area: 377 m$^2$/g), in which CNTs were dispersed throughout the sheet including its inside, and the CNTs were partially connected and bonded to each other with carbonized EP and carbonized THV, were randomly aggregated to form the sheet. The fibrous substances were also bonded to each other with carbonized EP and carbonized THV, and were in a state where the ends of CNTs protruded from the fibrous substances. CNTs were oriented in the longitudinal direction of the fibrous substances. The physical properties of the conductive porous sheet are shown in Fig. 2.

(Example 4)

A monolayered, conductive porous sheet having a nonwoven fabric structure (mass per unit area: 80 g/m$^2$, thickness: 220 $\mu$m, porosity: 81 %) was produced in a similar manner to the procedure of Example 3, except that the temperature/humidity were changed to 25°C/40%RH.

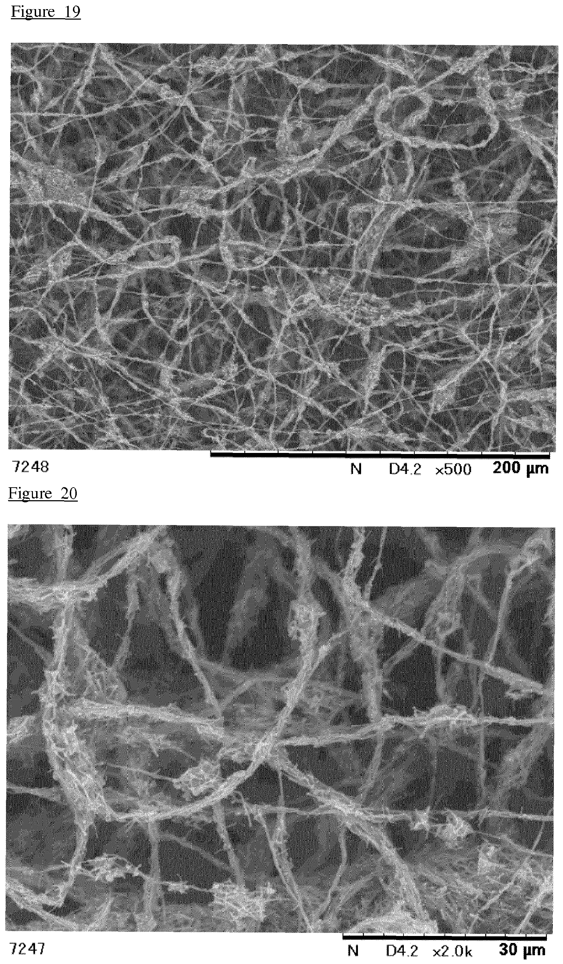

In the conductive porous sheet, as shown in Fig. 19 and Fig. 20, only porous and continuous fibrous substances (average fiber diameter: 1.5 $\mu$m, mass ratio (CNT:total of carbonized EP and carbonized THV) = 52:48, specific surface area: 330 m$^2$/g), in which CNTs were dispersed throughout the sheet including its inside, and the CNTs were partially connected and bonded to each other with carbonized EP and carbonized THV, were randomly aggregated to form the sheet. The fibrous substances were also bonded to each other with carbonized EP and carbonized THV, and were in a state where the ends of CNTs protruded from the fibrous substances. CNTs were oriented in the longitudinal direction of the fibrous substances. The physical properties of the conductive porous sheet are shown in Fig. 2.

(Example 5)

A monolayered, conductive porous sheet having a nonwoven fabric structure (mass per unit area: 55 g/m$^2$, thickness: 220 $\mu$m, porosity: 87%) was produced in a similar manner to the procedure of Example 3, except that the temperature/humidity were changed to 25°C/50%RH.

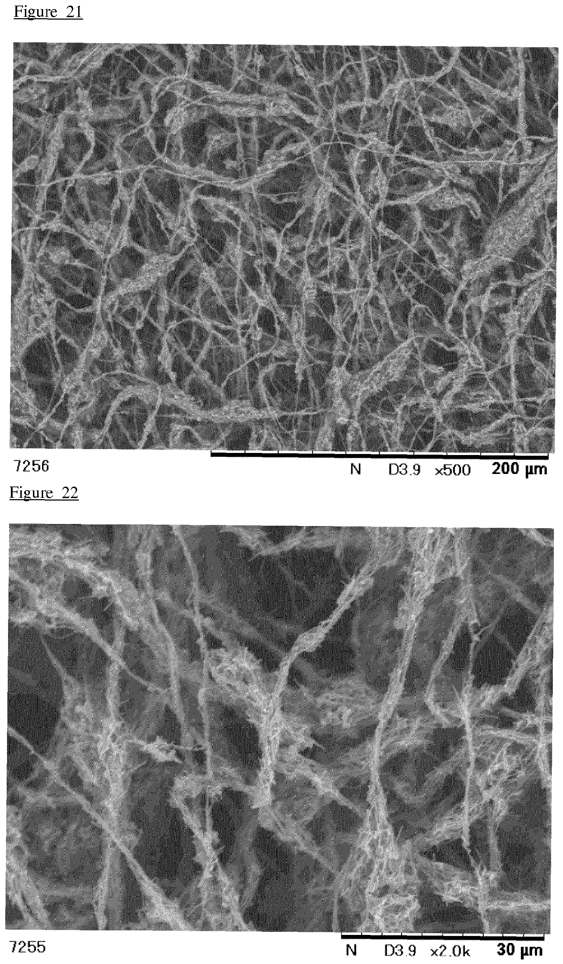

In the conductive porous sheet, as shown in Fig. 21 and Fig. 22, only porous and continuous fibrous substances (average fiber diameter: 1.8 $\mu$m, mass ratio (CNT:total of carbonized EP and carbonized THV) = 52:48, specific surface area: 310 m$^2$/g), in which CNTs were dispersed throughout the sheet including its inside, and the CNTs were partially connected and bonded to each other with carbonized EP and carbonized THV, were randomly aggregated to form the sheet. The fibrous substances were also bonded to each other with carbonized EP and carbonized THV, and were in a state where the ends of CNTs protruded from the fibrous substances. CNTs were oriented in the longitudinal direction of the fibrous substances. The physical properties of the conductive porous sheet are shown in Fig. 2.

(Example 6)

Continuous precursor fibers obtained by spinning the seventh spinning solution by electrospinning under the following conditions were directly collected on a stainless steel drum as a counter electrode to prepare a precursor fiber porous sheet in a nonwoven fabric form.

(Conditions for electrospinning)

Electrodes: a metal nozzle (inner diameter: 0.33 mm) and a stainless steel drum
Discharge rate: 4 g/hr
Distance between the nozzle tip and the stainless steel drum: 14 cm
Applied voltage: 12 kV

Temperature/humidity: 25°C/25% RH

Next, the epoxy resin as the high carbonizable organic material was cured by a heat treatment for 1 hour, using a hot-air dryer set to a temperature of 150°C, to obtain a precursor fiber cured porous sheet.

Then, the precursor fiber cured porous sheet was subjected to a carbonizing and sintering treatment under an argon gas atmosphere at a temperature of 800°C for 1 hour (heating rate: 10°C/min.), using a tubular furnace, to carbonize the epoxy resin and THV, and to eliminate most of the THV from the sheet, and a monolayered, conductive porous sheet having a nonwoven fabric structure (mass per unit area: 50 g/m$^2$, thickness: 200 $\mu$m, porosity: 87%) was produced.

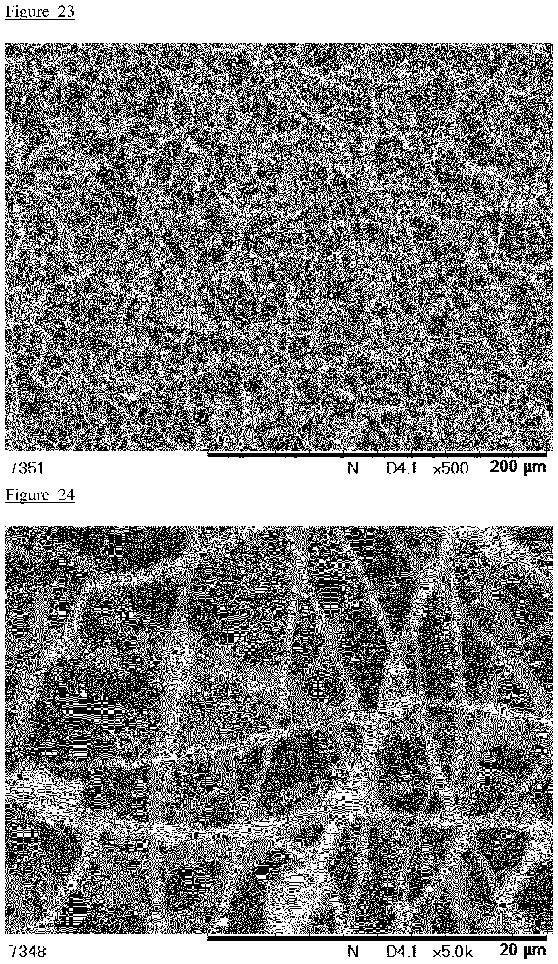

In the conductive porous sheet, as shown in Fig. 23 and Fig. 24, only porous and continuous fibrous substances (average fiber diameter: 0.8 $\mu$m, mass ratio (CNT:total of carbonized EP and carbonized THV) = 34:66, specific surface area: 388 m$^2$/g), in which CNTs were dispersed throughout the sheet including its inside, and the CNTs were partially connected and bonded to each other with carbonized EP and carbonized THV, were randomly aggregated to form the sheet. The fibrous substances were also bonded to each other with carbonized EP and carbonized THV, and were in a state where the ends of CNTs protruded from the fibrous substances. CNTs were oriented in the longitudinal direction of the fibrous substances. The physical properties of the conductive porous sheet are shown in Fig. 2.

(Example 7)

A monolayered, conductive porous sheet having a nonwoven fabric structure (mass per unit area: 40 g/m$^2$, thickness: 200 $\mu$m, porosity: 89%) was produced in a similar manner to the procedure of Example 6, except that the temperature/humidity were changed to 25°C/50%RH.

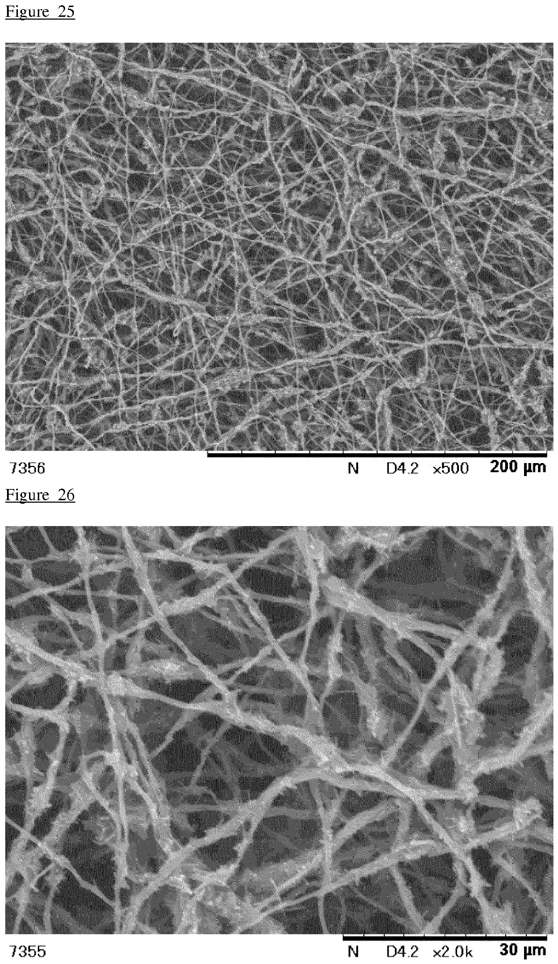

In the conductive porous sheet, as shown in Fig. 25 and Fig. 26, only porous and continuous fibrous substances (average fiber diameter: 1.5 $\mu$m, mass ratio (CNT:total of carbonized EP and carbonized THV) = 34:66, specific surface area: 410 m$^2$/g), in which CNTs were dispersed throughout the sheet including its inside, and the CNTs were partially connected and bonded to each other with carbonized EP and carbonized THV, were randomly aggregated to form the sheet. The fibrous substances were also bonded to each other with carbonized EP and carbonized THV, and were in a state where the ends of CNTs protruded from the fibrous substances. CNTs were oriented in the longitudinal direction of the fibrous substances. The physical properties of the conductive porous sheet are shown in Fig. 2.

(Example 8)

Continuous precursor fibers obtained by spinning the eighth spinning solution by electrospinning under the following conditions were directly collected on a stainless steel drum as a counter electrode to prepare a precursor fiber porous sheet in a nonwoven fabric form.

(Conditions for electrospinning)

Electrodes: a metal nozzle (inner diameter: 0.33 mm) and a stainless steel drum
Discharge rate: 4 g/hr
Distance between the nozzle tip and the stainless steel drum: 14 cm
Applied voltage: 9 kV
Temperature/humidity: 25°C/35% RH

Next, the epoxy resin as the high carbonizable organic material was cured by a heat treatment for 1 hour, using a hot-air dryer set to a temperature of 150°C, to obtain a precursor fiber cured porous sheet.

Then, the precursor fiber cured porous sheet was subjected to a carbonizing and sintering treatment under an argon gas atmosphere at a temperature of 800°C for 1 hour (heating rate: 10°C/min.), using a tubular furnace, to carbonize the epoxy resin and THV, and to eliminate most of the THV from the sheet, and a monolayered, conductive porous sheet having a nonwoven fabric structure (mass per unit area: 100 g/m$^2$, thickness: 210 $\mu$m, porosity: 76%) was produced.

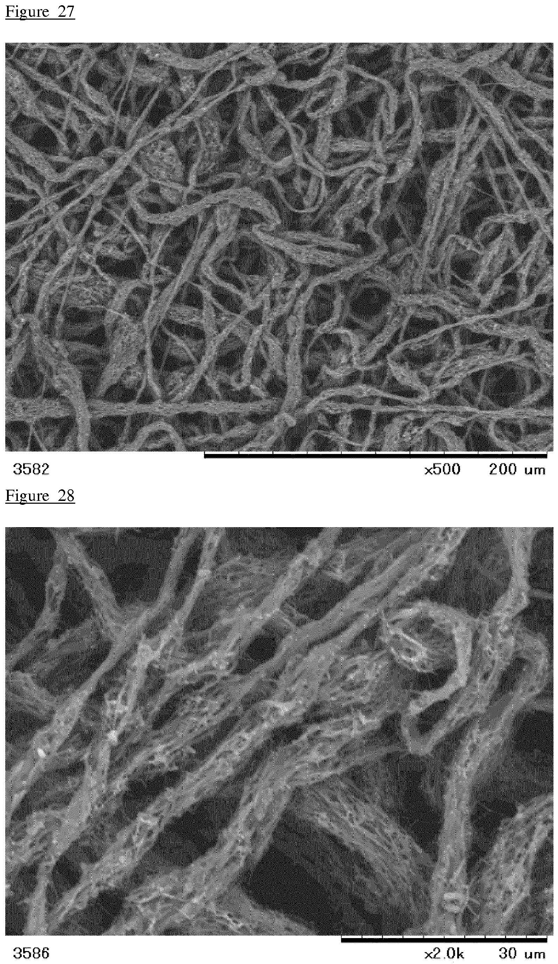

In the conductive porous sheet, as shown in Fig. 27 and Fig. 28, only porous and continuous fibrous substances (average fiber diameter: 4.2 $\mu$m, mass ratio (CNT:total of carbonized EP and carbonized THV) = 52:48, specific surface area: 210 m$^2$/g), in which CNTs were dispersed throughout the sheet including its inside, and the CNTs were partially connected and bonded to each other with carbonized EP and carbonized THV, were randomly aggregated to form the sheet. The fibrous substances were also bonded to each other with carbonized EP and carbonized THV, and were in a state where the ends of CNTs protruded from the fibrous substances. CNTs were oriented in the longitudinal direction of the fibrous substances. The physical properties of the conductive porous sheet are shown in Fig. 2.

(Comparative Example 7)

Continuous precursor fibers obtained by spinning the ninth spinning solution by electrospinning under the following conditions were directly collected on a stainless steel drum as a counter electrode to prepare a precursor fiber porous sheet in a nonwoven fabric form.

(Conditions for electrospinning)

Electrodes: a metal nozzle (inner diameter: 0.33 mm) and a stainless steel drum
Discharge rate: 4 g/hr
Distance between the nozzle tip and the stainless steel drum: 14 cm
Applied voltage: 10 kV
Temperature/humidity: 25°C/35% RH

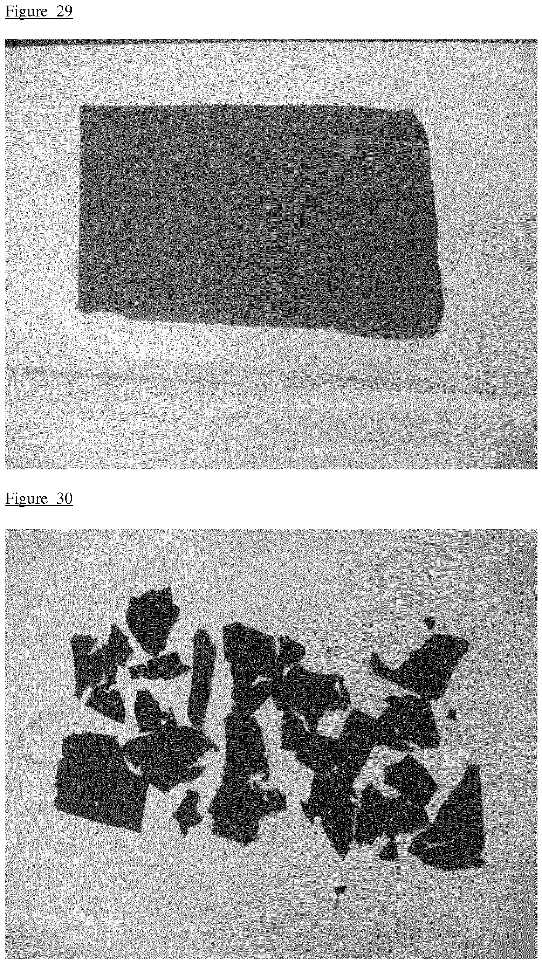

Next, the epoxy resin as the high carbonizable organic material was cured by a heat treatment for 1 hour, using a hot-air dryer set to a temperature of 150°C, to obtain a precursor fiber cured porous sheet (Fig. 29).
Then, the precursor fiber cured porous sheet was subjected to a carbonizing and sintering treatment under an argon gas atmosphere at a temperature of 800°C for 1 hour (heating rate: 10°C/min.), using a tubular furnace. Fragmentation due to shrinkage occurred, and the sheet form could not be maintained (Fig. 30).

[Table 2]

| | | (a) | (b) | (c) | (d) | (e)# | (f) | (g) | (h) |
|---|---|---|---|---|---|---|---|---|---|
| | unit | $g/m^2$ | $\mu m$ | % | $\mu m$ | | $m^2/g$ | % | $m\Omega \cdot cm^2$ |
| | Example 3 | 114 | 220 | 73 | 1.1 | 52:48 | 377 | 90 | 4 |
| | Example 4 | 80 | 220 | 81 | 1.5 | 52:48 | 330 | 78 | 3.7 |
| | Example 5 | 55 | 220 | 87 | 1.8 | 52:48 | 310 | 66 | 3.6 |
| | Example 6 | 50 | 200 | 87 | 0.8 | 34:66 | 388 | 80 | 10 |
| | Example 7 | 40 | 200 | 89 | 1.5 | 34:66 | 410 | 63 | 9 |
| | Example 8 | 100 | 210 | 76 | 4.2 | 52:48 | 210 | 85 | 3.5 |
| | Comp. Example 7 | - | - | - | - | - | - | - | - |
| (a): mass per unit area<br>(b): thickness<br>(c): porosity<br>(d): average fiber diameter<br>(e): content ratio<br>(f): specific surface area<br>(g): thickness retention rate<br>(h): electrical resistance<br># : (mass of first conductive material):(mass of second conductive material) | | | | | | | | | |

INDUSTRIAL APPLICABILITY

Since the conductive porous material of the present invention has a large surface area, it is not easily damaged by pressure, and it has a good conductivity; it is useful as a base material for a gas diffusion electrode for a fuel cell, as an electrode for an electric double-layer capacitor, or as an electrode of a lithium ion secondary battery.
Although the present invention has been described with reference to specific embodiments, various changes and modifications obvious to those skilled in the art are possible without departing from the scope of the appended claims.

**Claims**

1.  A conductive porous material, which is an aggregate of fibrous substances comprising first conductive materials, and second conductive materials that connect between the first conductive materials, wherein the conductive porous material has a specific surface area of 100 m$^2$/g or more, and a thickness retention rate after pressing at 2 MPa of 60% or more.

2.  The conductive porous material according to claim 1, wherein the first conductive material is at least one selected from the group consisting of a fullerene, carbon nanotubes, carbon nanohorns, graphite, vapor grown carbon fibers, carbon black, a metal, and a metal oxide.

3.  The conductive porous material according to claim 1 or 2, wherein the second conductive material is a carbonized organic material.

4.  The conductive porous material according to any one of claims 1 to 3, wherein the porosity is 70% or more.

5.  The conductive porous material according to any one of claims 1 to 4, wherein the conductive porous material is used as a base material for an electrode.

6.  A polymer electrolyte fuel cell, comprising the conductive porous material according to any one of claims 1 to 5, as a base material for a gas diffusion electrode.

7.  A method of manufacturing a conductive porous material, comprising the steps of:

    spinning a spinning solution containing a first conductive material and a carbonizable organic material to form a precursor fiber porous material in which precursor fibers are aggregated, and
    carbonizing the carbonizable organic material to convert it into a second conductive material, and obtaining a conductive porous material having a specific surface area of 100 m$^2$/g or more and a thickness retention rate after pressing at 2 MPa of 60% or more, which is an aggregate of fibrous substances in which the first conductive materials are connected to each other via the second conductive materials.

Figure 1

1508          N   D4.7   x500   **200 μm**

Figure 2

1506          N   D4.7   x2.0k   **30 μm**

Figure 3

1477        N   D4.6   x500   **200 µm**

Figure 4

1486        N   D4.7   x2.0k   **30 µm**

Figure 5

3020                                              N    D4.3  x500   **200 µm**

Figure 6

3019                                              N    D4.3  x2.0k   **30 µm**

Figure 7

6745                    N    D3.8   x500    **200 μm**

Figure 8

6744                    N    D3.8   x2.0k    **30 μm**

Figure 9

6766            N    D3.6   ×300    **300 µm**

Figure 10

6757            N    D3.6   ×2.0k    **30 µm**

Figure 11

6843                                      N    D3.7   ×500   **200 μm**

Figure 12

6842                                      N    D3.7   ×2.0k   **30 μm**

Figure 13

Figure 14

Figure 15

Figure 16

Figure 17

7242          N    D4.1   x500    **200 µm**

Figure 18

7241          N    D4.1   x2.0k    **30 µm**

Figure 19

7248　　　　　　　　　　　　　　　　　N　D4.2　×500　**200 μm**

Figure 20

7247　　　　　　　　　　　　　　　　　N　D4.2　×2.0k　**30 μm**

Figure 21

7256 N D3.9 ×500 **200 µm**

Figure 22

7255 N D3.9 ×2.0k **30 µm**

Figure 23

7351     N   D4.1   x500   **200 µm**

Figure 24

7348     N   D4.1   x5.0k   **20 µm**

Figure 25

7356      N    D4.2   x500    **200 μm**

Figure 26

7355      N    D4.2   x2.0k    **30 μm**

Figure 27

3582                                            x500     200 um

Figure 28

3586                                            x2.0k     30 um

Figure 29

Figure 30

## INTERNATIONAL SEARCH REPORT

| | International application No. |
|---|---|
| | PCT/JP2015/058929 |

A. CLASSIFICATION OF SUBJECT MATTER
*H01B5/02*(2006.01)i, *D01F9/24*(2006.01)i, *D04H1/4242*(2012.01)i, *H01M4/86*(2006.01)i, *H01M4/88*(2006.01)i, *H01M4/96*(2006.01)i, *H01M8/10*(2006.01)n

According to International Patent Classification (IPC) or to both national classification and IPC

B. FIELDS SEARCHED

Minimum documentation searched (classification system followed by classification symbols)
H01B5/02, D01F9/24, D04H1/4242, H01M4/86, H01M4/88, H01M4/96, H01M8/10

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2011/070893 A1  (Nisshinbo Holdings Inc.), 16 June 2011 (16.06.2011), paragraphs [0001] to [0029]; claims 1 to 12 & JP 5672239 B2        & US 2012/0251925 A1 & EP 2511408 A1          & CA 2782274 A & CN 102652192 A | 1–7 |
| A | JP 2006-244950 A  (Konica Minolta Holdings, Inc.), 14 September 2006 (14.09.2006), claims 1 to 5; paragraphs [0020] to [0027], [0034] to [0040], [0046], [0073] (Family: none) | 1–7 |

☒  Further documents are listed in the continuation of Box C.          ☐  See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered   to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 19 June 2015 (19.06.15) | 30 June 2015 (30.06.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

34

## INTERNATIONAL SEARCH REPORT

| International application No. |
| --- |
| PCT/JP2015/058929 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2009-208061 A (National University Corporation Gunma University), 17 September 2009 (17.09.2009), claims 7 to 22; paragraphs [0022] to [0025] & US 2010/0323272 A1 & WO 2009/098812 A1 | 1-7 |
| A | WO 2009/069505 A1 (Toyota Motor Corp.), 04 June 2009 (04.06.2009), paragraphs [0001] to [0012] & JP 2009-133037 A & US 2011/0012296 A1 & CA 2706624 A1 & CN 101874131 A | 1-7 |
| A | JP 2007-515364 A (The University of Akron), 14 June 2007 (14.06.2007), entire text & US 2009/0068461 A1 & WO 2005/044723 A2 & KR 10-2006-0133974 A | 1-7 |
| A | WO 2012/026498 A1 (Toho Tenax Co., Ltd.), 01 March 2012 (01.03.2012), claims 4, 5 & US 2013/0157171 A1 & EP 2610952 A1 & CA 2809763 A1 & CN 103081194 A | 1-7 |
| A | JP 2012-199225 A (Japan Vilene Co., Ltd.), 18 October 2012 (18.10.2012), paragraph [0033] & US 2013/0040213 A1 & EP 2485308 A1 & CN 102629694 A & KR 10-2012-0090853 A | 1-7 |
| A | WO 2014/014055 A1 (Mitsubishi Rayon Co., Ltd.), 23 January 2014 (23.01.2014), paragraphs [0027], [0070] & JP 5664791 B2 | 1-7 |
| A | WO 2014/010715 A1 (Japan Vilene Co., Ltd.), 16 January 2014 (16.01.2014), paragraph [0041] (Family: none) | 1-7 |
| P,A | WO 2014/185491 A1 (Japan Vilene Co., Ltd.), 20 November 2014 (20.11.2014), paragraphs [0041], [0042], [0047] (Family: none) | 1-7 |
| E,A | WO 2015/068745 A1 (Japan Vilene Co., Ltd.), 14 May 2015 (14.05.2015), paragraphs [0020] to [0024] (Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011089754 A
- JP 2010530929 A
- JP 2009287138 A